(19) Europäisches Patentamt
European Patent Office
Office européen des brevets

(11) **EP 1 659 377 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(51) Int Cl.:
*G01F 1/84* (2006.01) *G01N 9/00* (2006.01)

(21) Anmeldenummer: **05021128.3**

(22) Anmeldetag: **28.09.2005**

(54) **Coriolis-Massendurchflussmessgerät und Verfahren zum Betreiben eines Coriolis-Massendurchflussmessgeräts**

Coriolis mass flow meter and method for operating a Coriolis mass flow meter

Débitmètre massique de Coriolis et procédé de commande d'un débitmètre massique de Coriolis

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.11.2004 DE 102004056555**
**23.03.2005 DE 102005014058**

(43) Veröffentlichungstag der Anmeldung:
**24.05.2006 Patentblatt 2006/21**

(73) Patentinhaber: **Krohne AG**
**4019 Basel (CH)**

(72) Erfinder: **Kolahi, Kourosh**
**24118 Kiel (DE)**

(74) Vertreter: **Gesthuysen Patent- und Rechtsanwälte**
**Patentanwälte**
**Postfach 10 13 54**
**45013 Essen (DE)**

(56) Entgegenhaltungen:
**WO-A-00/36379 US-A- 5 661 232**
**US-A- 5 861 561**

• H. SCHLICHTING: "Boundary layer Theory, 7th edition" 1979, MCGRAW HILL, ISBN 0-07-055334-3 , XP002373476 * Seite 85 - Seite 87 *

EP 1 659 377 B1

**Beschreibung**

Die Erfindung betrifft ein Verfahren zum Betreiben eines Massendurchflußmeßgeräts, das nach dem Coriolis-Prinzip arbeitet, gemäß dem Oberbegriff von Patentanspruch 1.

Coriolis-Massendurchflußmeßgeräte sind aus dem Stand der Technik gut bekannt, siehe z. B. die DE 100 02 635 A1. Dabei werden herkömmliche Coriolis-Massendurchflußmeßgeräte häufig nach dem Eigenresonanzverfahren betrieben, d. h. in einer Eigenfrequenz des Meßrohrs angeregt, im folgenden auch als Resonanzfrequenz bezeichnet. Über die Änderung der Eigenfrequenz des von einem Medium durchströmten Meßrohrs gegenüber der Eigenfrequenz im Falle eines leeren Meßrohrs kann auch auf die Dichte des strömenden Mediums rückgeschlossen werden. Eine weitere interessante Meßgröße ist die Viskosität des durch das Meßrohr strömenden Mediums.

Die Viskosität wird bei herkömmlichen Coriolis-Massendurchflußmeßgeräten z. B. durch Erzeugen von Torsionsschwingungen an dem Meßrohr und damit durch die Beanspruchung des Mediums zur Scherspannung über die Messung der erhöhten Energieaufnahme gemessen, siehe z. B. die DE 100 20 606 A1. Bei einem solchen Verfahren treten jedoch einige Unzulänglichkeiten auf, die die genaue Bestimmung der Viskosität wesentlich beeinträchtigen.

Aus der WO 00/36379 A ist ein gattungsgemäßes Verfahren zur Bestimmung der Viskosität des Mediums bekannt. Hier werden die dynamische bzw. kinematische Viskosität des Mediums von einer entlang der Rohrleitung gemessenen Druckdifferenz abgeleitet, wozu ein vergleichsweise großer messtechnischer Aufwand erforderlich ist, nämlich wenigstens zwei Drücke messtechnisch erfasst werden müssen.

Damit ist es die Aufgabe der Erfindung, ein Verfahren zum Betreiben eines Coriolis-Massendurchflußmeßgeräts anzugeben, das die Erfassung der Viskosität des durch das Meßrohr strömenden Mediums auf einfachere Weise ermöglicht.

Ausgehend von dem eingangs beschriebenen Verfahren ist die zuvor hergeleitete und aufgezeigte Aufgabe dadurch gelöst, daß der Druckabfall längs des Meßrohrs bestimmt wird, indem die erfaßten Schwingungen des Meßrohrs auf der Grundlage eines physikalisch-mathematischen Modells für die Dynamik des Massendurchflußmeßgeräts ausgewertet werden, wobei das physikalisch-mathematische Modell zur Beschreibung der Schwingungen des Massendurchflußzneßgeräts bei Anregung des Meßrohrs in wenigstens einer Eigenform geeignet ist, wobei das physikalisch-mathematische Modell die Kopplung zwischen wenigstens zwei Eigenformen der Schwingungen des Meßrohrs berücksichtigt, wobei das physikaliseh-mathematische Modell außer dem Meßrohr auch den Einfluß wenigstens einer weiteren Einrichtung des Massendurchflußmeßgeräts, wie einem Tragrohr oder/und einer Aufhängung des Meßrohrs des Massendurchflußmeßgeräts, berücksichtigt, wobei die Temperatur im Massendurchflußmeßgerät erfaßt wird, um die Temperaturabhängigkeit der Funktion von Einrichtungen des Massendurchflußmeßgeräts, wie einem Schwingungserzeuger für das Meßrohr oder/und einem Schwingungssensor für das Meßrohr, zu berücksichtigen.

Die Viskosität wird mittelbar, nämlich über den Druckabfall des Mediums längs des Meßrohrs bestimmt, ohne auf eine Änderung der Energieaufnahme abstellen zu müssen. Gemäß einer bevorzugten Weiterbildung ist es dazu möglich, daß der Druckabfall längs des Meßrohrs über den Staudruck mittels der Formel

$$\Delta p = C_w \cdot p_s \frac{L}{d}, \qquad (1)$$

ermittelt wird, wobei $\Delta p$ den Druckabfall längs des Meßrohrs, $C_w$ den Reibungskoeffizienten, gegeben durch *64/Re* mit der Reynolds-Zahl *Re*, $p_s$ den Staudruck, *L* die Länge des Meßrohrs und *d* den Durchmesser des Meßrohrs bezeichnet.

Gemäß einer bevorzugten Weiterbildung ist ferner vorgesehen, daß der Staudruck $p_s$ indirekt über die mittlere Geschwindigkeit $\bar{v}$ des strömenden Mediums bestimmt wird, vorzugsweise mittels der Beziehung

$$p_s = \frac{1}{2}\rho \cdot \bar{v}^2, \qquad (2)$$

wobei p die Dichte des strömenden Mediums bezeichnet. Dabei gilt für die mittlere Geschwindigkeit

$$\bar{v} = \frac{\dot{m}}{A \cdot \rho}, \qquad\qquad (3)$$

wobei A die durchströmte Querschnittsfläche des Meßrohrs bezeichnet.

Weiterhin wird gemäß einer bevorzugten Weiterbildung der mathematische Zusammenhang zwischen dem Reibungskoeffizienten $C_w$ und der Reynolds-Zahl *Re* zur Bestimmung der Viskosität des durch das Meßrohr strömenden Mediums zur Verfügung gestellt, wozu dieser Wert vorzugsweise in einer geeigneten Speichereinrichtung des Coriolis-Massendurchflußmeßgeräts abgelegt ist.

Ferner ist gemäß einer bevorzugten Weiterbildung der Erfindung vorgesehen, daß die Viskosität η des strömenden über die Formel

$$\eta = \frac{\bar{v}\rho d}{Re} \qquad\qquad (4)$$

bestimmt wird, die man über die Definition der Reynolds-Zahl erhält:

$$Re = \frac{\bar{v}\rho d}{\eta} \qquad\qquad (5)$$

Zur Bestimmung des Differenzdrucks des durch das Meßrohr strömenden Mediums sind grundsätzlich alle bekannten Differenzdruckmeßverfahren geeignet. Erfindungsgemäß ist jedoch vorgesehen, daß der Druckabfall längs des Meßrohrs bestimmt wird, indem die erfaßten Schwingungen des Meßrohrs auf der Grundlage eines physikalisch-mathematischen Modells für die Dynamik des Massendurchflußmeßgeräts ausgewertet werden.

Dabei ist ist vorgesehen, daß das physikalisch-mathematische Modell zur Beschreibung der Schwingungen des Massendurchflußmeßgeräts bei Anregung des Meßrohrs in seiner ersten Eigenform und/oder in seiner zweiten Eigenform geeignet ist. Ferner ist gemäß einer bevorzugten Weiterbildung der Erfindung vorgesehen, daß das physikalisch-mathematische Modell die Kopplung zwischen der ersten Eigenform und der zweiten Figenform der Schwingungen des Meßrohrs berücksichtigt. Das heißt, daß die Bestimmung der Viskosität über den Druckabfall über Kopplung der beiden Eigenformen in einer oder mehreren Frequenzen, vorzugsweise in der Resonanzfrequenz der ersten Eigenform, erfolgen kann.

Erfindungsgemäß ist ferner vorgesehen, daß das physikalisch-mathematische Modell außer dem Meßrohr auch den Einfluß wenigstens einer weiteren Einrichtung des Massendurchflußmeßgeräts, wie einem Tragrohr oder/und einer Aufhängung des Meßrohrs des Massendurchflußmeßgeräts, berücksichtigt. Zusätzlich dazu ist erfindungsgemäß vorgesehen, daß die Temperatur im Massendurchflußmeßgerät erfaßt wird, um die Temperaturabhängigkeit der Funktion von Einrichtungen des Massendurchflußmeßgeräts, wie einem Schwingungserzeuger für das Meßrohr oder/und einem Schwingungssensor für das Meßrohr, zu berücksichtigen. Gemäß einer bevorzugten Weiterbildung der Erfindung ist es auch möglich, daß die Temperatur des Meßrohrs erfaßt wird, um eine temperaturabhängige Änderung der Geometrie des Meßrohrs zu berücksichtigen. Ferner kann gemäß einer bevorzugten Weiterbildung der Erfindung eine druckabhängige Änderung der Geometrie des Meßrohrs berücksichtigt werden, indem der Druck im Meßrohr erfaßt wird.

Im einzelnen gibt es nun eine Vielzahl von Möglichkeiten, das erfindungsgemäße Verfahren auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels unter Bezugnahme auf die Zeichnung verwiesen. In der Zeichnung zeigt

Fig. 1 schematisch die Reibung einander benachbarter Strömungsflächen des durch ein Meßrohr eines Coriolis-Massendurchflußmeßgeräts strömenden Mediums,

Fig. 2 schematisch das Strömungsprofil bei einer laminaren Strömung bzw. bei einer turbulenten Strömung,

Fig. 3 den Reibungskoeffizienten als Funktion der Reynolds-Zahl für laminare Strömungen bzw. für turbulente Strömungen,

Fig. 4 ein Strukturbild in einem physikalisch-mathematischen Modell zur Beschreibung der Dynamik eines Coriolis-Massendurchflußmeßgeräts,

Fig. 5 den mechanischen Aufbau eines Coriolis-Massendurchflußmeßgeräts zur Verwendung mit dem bevorzugten Ausführungsbeispiel der Erfindung und

Fig. 6 einen für das physikalisch-mathematische Modell verwendeten Modellansatz mit konzentrierten Ersatzelementen.

Die Viskosität eines Mediums, auch als Zähigkeit des Mediums bezeichnet, ist die Eigenschaft des Mediums, der Verschiebung zweier, einander benachbarter Schichten des Mediums zueinander einen Widerstand entgegenzusetzen, was auch als innere Reibung bezeichnet wird. Es tritt also ein Fließwiderstand auf, und zwar nicht nur bei Flüssigkeiten, sondern auch bei Gasen und sogar bei Festkörpern. Die dynamische Viskosität $\eta$ ist als Proportionalitätsfaktor zwischen der Schubspannung und der Schergeschwindigkeit beschrieben, also dem Geschwindigkeitsgefälle beim Fließen. Teilt man die dynamische Viskosität durch die Dichte des Mediums, so erhält man die kinematische Viskosität.

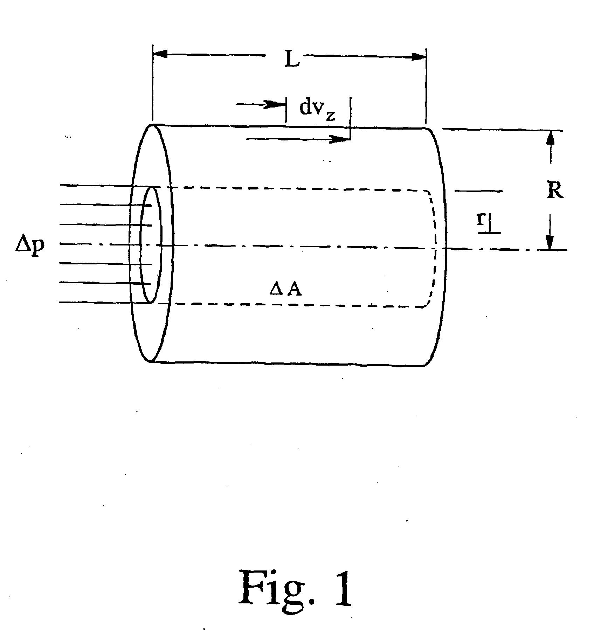

Aus Fig. 1 ist nun schematisch die Reibung zweier, einander benachbarter Strömungsflächen bei einer laminaren Strömung ersichtlich. Bei einer laminaren Strömung besteht in Fließrichtung ein Gleichgewicht zwischen der Reibungskraft $F_W$, die einander benachbarte Strömungsflächen $\Delta A$ mit unterschiedlichen Geschwindigkeiten aufeinander ausüben, und der Druckkraft $F$, die die Flächen aneinander vorbeitreibt:

$$F_W = \eta \frac{dv_z}{dr_\perp} \cdot \Delta A \,, \qquad (6)$$

wobei $dv_z/dr_\perp$ den Geschwindigkeitsgradienten zwischen den Strömungsflächen beschreibt und für die Druckkraft $F$ gilt:

$$F = \Delta p \cdot \pi r_\perp^2. \qquad (7)$$

Daraus ergibt sich eine Differentialgleichung für das Geschwindigkeitsprofil:

$$\frac{dv_z}{dr_\perp} = \frac{r_\perp}{2\eta} \cdot \frac{\Delta p}{L} \qquad (8)$$

mit der Lösung

$$v_z = \frac{1}{4\eta}(R^2 - (r_\perp)^2) \cdot \frac{\Delta p}{L}, \qquad (9)$$

wobei $R$ den Radius des Meßrohrs bezeichnet. Dieses Strömungsprofil ist ein Paraboloid mit den Extremwerten

$$v_z(r_\perp = 0) = \frac{R^2}{4\eta} \cdot \frac{\Delta p}{L} \text{ und } v_z(r_\perp = R) = 0. \qquad (10)$$

Das heißt, daß durch den Druck $p$ auf den inneren Flüssigkeitszylinder dieser mit der Geschwindigkeitsdifferenz $dv_z$ durch den äußeren Zylinder getrieben wird, wobei die Reibungskraft $F_W$ an der Grenzfläche $\Delta A$ entsteht

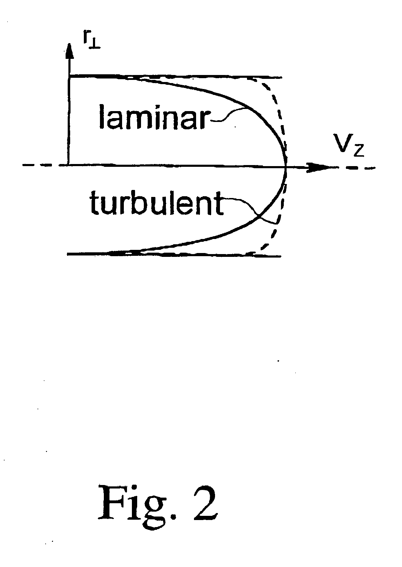

Das resultierende Geschwindigkeitsprofil für eine laminare Strömung ist schematisch aus Fig. 2 ersichtlich, Zum Vergleich ist auch das Strömungsprofil einer turbulenten Strömung wiedergegeben. Dieses zeichnet sich im wesentlichen dadurch aus, daß sich die Strömungsgeschwindigkeit im Innenbereich wenig ändert und erst in der Nähe der Wandung des Meßrohrs stark abnimmt.

Man kann nun die pro Zeiteinheit durch das Meßrohr transportierte Masse bestimmen, und zwar ergibt sich diese zu

$$\dot{m} = \frac{dm}{dt} = 2\pi\rho \int_0^R v_z(r_\perp) r_\perp \, dr_\perp = \frac{\pi}{8} \frac{\rho}{\eta} R^4 \frac{\Delta p}{L}. \qquad (11)$$

Dies ist das bekannte Gesetz von Hagen-Poisseuille, das den Zusammenhang zwischen dem Massendurchfluß, der Fluiddichte und der dynamischen Viskosität bei einer laminaren Strömung beschreibt.

Da in einem Coriolis-Massendurchflußmeßgerät hauptsächlich turbulente Strömung vorliegt, muß der Einfluß der Trägheitskräfte berücksichtigt werden. Wichtig ist dabei, welche Energie $\Delta W$ aufgebracht werden muß, um die Masse $\Delta m$ über die Länge des Meßrohrs $L$ zu transportieren. Dieses Verhältnis ergibt sich zu

$$\frac{\Delta W}{\Delta m} = \frac{\Delta p \pi R^2 L}{\rho \pi R^2 L} = \frac{\Delta p}{\rho}, \qquad (12)$$

wobei für eine laminare Strömung gilt

$$\Delta p = \frac{8L\eta\dot{m}}{\pi R^4 \rho}. \qquad (13)$$

Wird in diese Gleichung $\dot{m}$ nach der Beziehung

$$\dot{m} = \pi R^2 \rho \bar{v} \qquad (14)$$

aus der mittleren Strömungsgeschwindigkeit $\bar{v}$ berechnet, so folgt daraus:

$$\Delta p = \frac{8L\eta\bar{v}}{R^2}. \qquad (15)$$

Setzt man in diese Gleichung das Verhältnis der Reibungskräfte zu den Trägheitskräften, d. h. die Reynolds-Zahl:

$$Re = \frac{2R\bar{v}\rho}{\eta} \qquad (16)$$

ein, so erhält man

$$\Delta p = \frac{64}{Re} \cdot \frac{\rho\bar{v}^2}{2} \cdot \frac{L}{d}. \qquad (17)$$

Die Größe

$$P_{s'} = \frac{\rho \bar{v}^2}{2} \qquad (18)$$

wird allgemein als Staudruck bezeichnet und $64/Re = C_W$ als Reibungskoeffizient der Strömung. Damit erhält man also

$$\frac{\Delta w}{\Delta m} = c_w \frac{P_s L}{\rho d} = \frac{\Delta p}{\rho}. \qquad (19)$$

Dieses Gesetz, das zunächst nur für laminare Strömungen hergeleitet worden ist, gilt ganz allgemein, d. h. auch für turbulente Strömungen, wenn der richtige Wert für den Reibungskoeffizienten verwendet wird. Dabei gilt $C_W = 64/Re$ für laminare Strömungen und $C_W >> 64/Re$ für turbulente Strömungen.

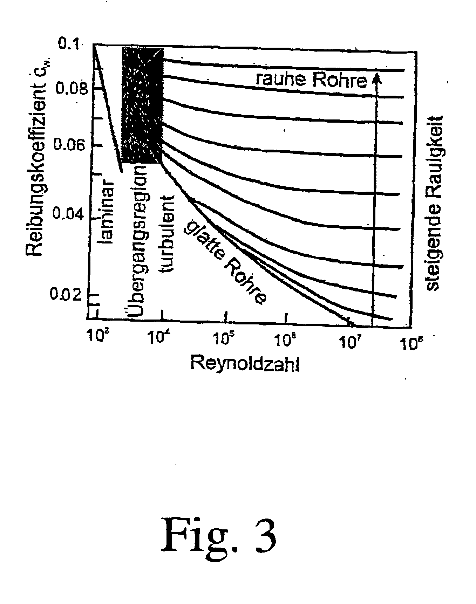

Die Abhängigkeit des Reibungskoeffizienten von der Reynolds-Zahl ist schematisch aus Fig. 3 ersichtlich. Für sehr große Reynolds-Zahlen wird $C_W$ praktisch konstant, hängt aber von der Oberflächenbeschaffenheit der Rohrwandung des Meßrohrs, also von deren relativer Rauhigkeit, ab. Bei einem Coriolis-Meßgerät mit einem Durchmesser des Meßrohrs von z. B. 10 mm beträgt die Reynolds-Zahl bei typischem Nenndurchfluß etwa $Re = 10^5$, so daß genügend Empfindlichkeit zwischen dem Reibungskoeffizienten $C_W$ und der Reynolds-Zahl vorliegt. Damit können zur Messung der Viskosität zuerst der Reibungskoeffizient $C_W$ und dann die zugehörige Reynolds-Zahl über den abgelegten Zusammenhang mit dem Reibungskoeffizienten bestimmt werden. Anschließend wird die Viskosität über die Gleichung

$$\eta = \frac{2R\bar{v}\rho}{Re} \qquad (20)$$

ermittelt.

Die Dichte $\rho$ kann mit allen gängigen Verfahren bestimmt werden. Die Bestimmung der mittleren Geschwindigkeit $\bar{v}$ kann ebenfalls mit allen bekannten Verfahren erfolgen, wobei vorliegend die Bestimmung vorzugsweise entsprechend Gleichung 14 wie nachfolgend angegeben erfolgt:

$$\bar{v} = \frac{\dot{m}}{\pi R^2 \rho}. \qquad (21)$$

Zur Bestimmung des Zusammenhangs zwischen Reibungskoeffizienten und dazugehörigen Reynolds-Zahlen werden Werte für $C_W$ bei verschiedenen Geschwindigkeiten z. B. für Wasser aufgenommen. Der Zusammenhang läßt sich dann durch eine mathematische Funktion mit wenigen Parametern sehr gut approximieren.

Wie zuvor schon ausgeführt, können zur Differenzdruckmessung alle gängigen Meßprinzipien, wie Druckmessung mittels Dehnungsmeßstreifen, verwendet werden. Gemäß einem bevorzugten Ausführungsbeispiel der Erfindung wird jedoch ein modellgestütztes Verfahren eingesetzt.

Bei diesem modellgestützten Verfahren wirkt das Meßrohr als Federelement, das ein- und ausgangsseitig mit unterschiedlichen Drücken beaufschlagt wird, Dadurch weisen die eingangsseitige Meßrohrhälfte und die ausgangsseitige Meßrohrhälfte voneinander verschiedene Federkonstanten auf, wodurch sich eine Asymmetrie im Meßrohr ergibt Diese Asymmetrie führt zu einer auslenkungsproportionalen Kopplung $K_{sij}$ der Eigenformen des Meßrohrs. Diese sind orthogonal zur geschwindigkeitsproportionalen, massenstrombedingten Kopplung der Eigenformen. Damit kann der Differenzdruck beispielsweise über den Realteil der Schwingungen der zweiten Eigenform gemessen werden, wenn die erste Eigenform, wie bei Coriolis-Massendurchflußmeßgeräten häufig praktiziert, in ihrer Eigenfrequenz angeregt wird.

Aus Fig, 4 ist die Einwirkung der Viskosität im Rahmen des vorliegend verwendeten physikalisch-mathematischen Modells für die Dynamik des Coriolis-Massendurchflußmeßgeräts ersichtlich. Die Messung der $K_{sij}$ ist dem Fachmann geläufig, wozu auf die DE 100 02 635 A1 verwiesen wird

Zur Differenzdruckmessung können alle gängigen. Meßprinzipien, wie die Verwendung von Dehnungsmeßstreifen, angewandt werden. Vorzugsweise wird ein derartiges Verfahren eingesetzt, wie im folgenden beschrieben. Bei diesem Verfahren werden zwei physikalisch unterschiedliche Effekte ausgenutzt:

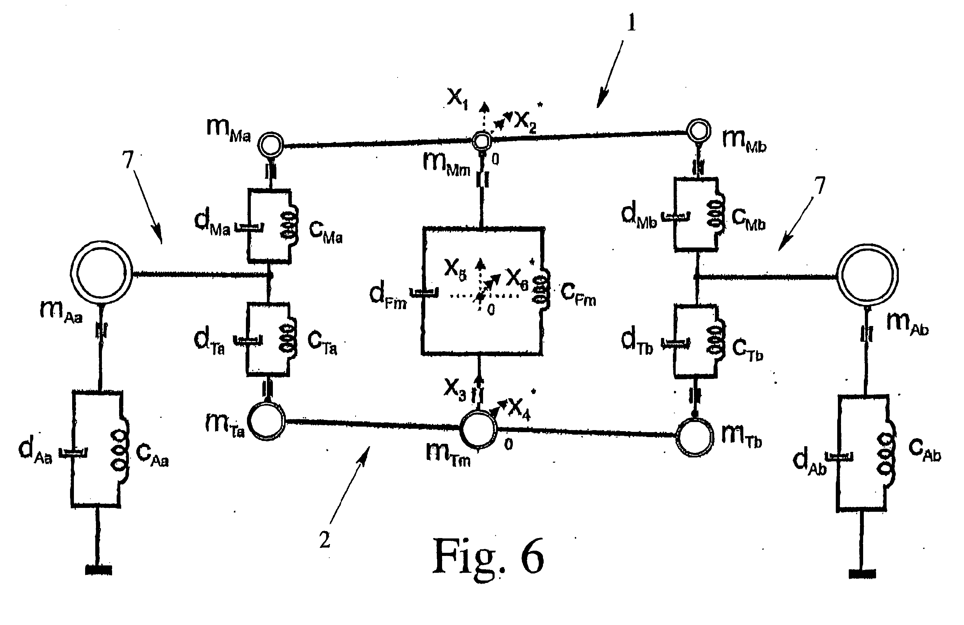

1. Änderung der Federkonstante der beiden Hälften des Meßrohres: Beim ersten Effekt wird das Meßrohr als Federelement angesehen, das eingangsseitig und ausgangsseitig jeweils mit unterschiedlichen Drücken beaufschlagt wird. Dadurch weisen die eingangs- bzw. ausgangsseitigen Meßrohrhälften unterschiedliche Federkonstanten auf, wodurch sich im Meßrohr 1 eine Asymmetrie ergibt. Bezogen auf das weiter unten beschriebene Modell mit diskreten Ersatzelementen nach Fig. 6 bedeutet dies, daß sich die konzentrierten Ersatzfedersteifigkeiten durch den Differenzdruck ungleich ($c_{Ma} \neq c_{Mb}$) ändern. Ihre Differenz $k_s = c_{Ma} - c_{Mb}$ ist ein Maß für den Differenzdruck im Meßrohr: $k_s = f(\Delta p)$. Diese Asymmetrie in den Federkonstanten fuhrt zu Auslenkungsproportionalen Kopplungen $k_{sij}$ der Eigenformen des Meßrohres 1.

2. Änderungen der Massen der Meßrohrhälften: Beim zweiten Effekt wird durch den Differenzdruck die komprinüerbare Phase, falls eine solche vorhanden ist, in der eingangs- und ausgangsseitigen Meßrohrhälfte jeweils unterschiedlich komprimiert. Dadurch weisen die eingangs- bzw. ausgangsseitigen Meßrohrhälften unterschiedliche Massen auf, wodurch eine Asymmetrie im Meßrohr erzeugt wird. Bezogen auf das weiter unten beschriebene Modell mit diskreten Ersatzelementen nach Fig. 6 bedeutet dies, daß sich die konzentrierten Ersatzmassen durch den Differenzdruck ungleich ($m_{Ma} \neq m_{Mb}$) ändern. Ihre Differenz $k_o = m_{Ma} - m_{Mb}$ ist ein Maß für den Differenzdruck im Meßrohr, falls eine Strömungsphase kompressibel ist: $k_a = f(\Delta p)$. Diese Asymmetrie in den Massen führt zu beschleunigungsproportionalen Kopplungen $k_{aij}$ der Eigenformen des Meßrohres.

Die auslenkungs- und beschleunigungsproportionalen Kopplungen sind bei einem monofrequenten Frequenzbetrieb nicht unterscheidbar, denn sie haben im eingeschwungenen Zustand die gleiche Wirkung. Zur Bestimmung ihrer gemeinsamen Wirkung ist nicht die getrennte Bestimmung von $k_{sij}$ und $k_{aij}$ erforderlich, sondern es läßt sich einfach eine ihrer folgenden Kombinationen im eingeschwungenen Zustand bestimmten:

$$k_{saij}(s) = k_{aij}s^2 + k_{sij} \text{ und speziell für } k_{sa12}(s) = k_{a12}s^2 + k_{s12} \qquad (22)$$

$$k_{asij}(s) = k_{aij} + \frac{k_{sij}}{s^2} \text{ und speziell für } k_{as12}(s) = k_{a12} + \frac{k_{s12}}{s^2}, \qquad (23)$$

wobei $s$ der Laplace-Operator ist. Zwischen den äquivalenten Koeffizienten besteht die Beziehung:

$$\frac{k_{as12}(s)}{k_{sa12}(s)} = \frac{1}{s^2}. \qquad (24)$$

Die äquivalenten Koeffizienten lassen sich bei bekannter Frequenz ineinander umrechnen.

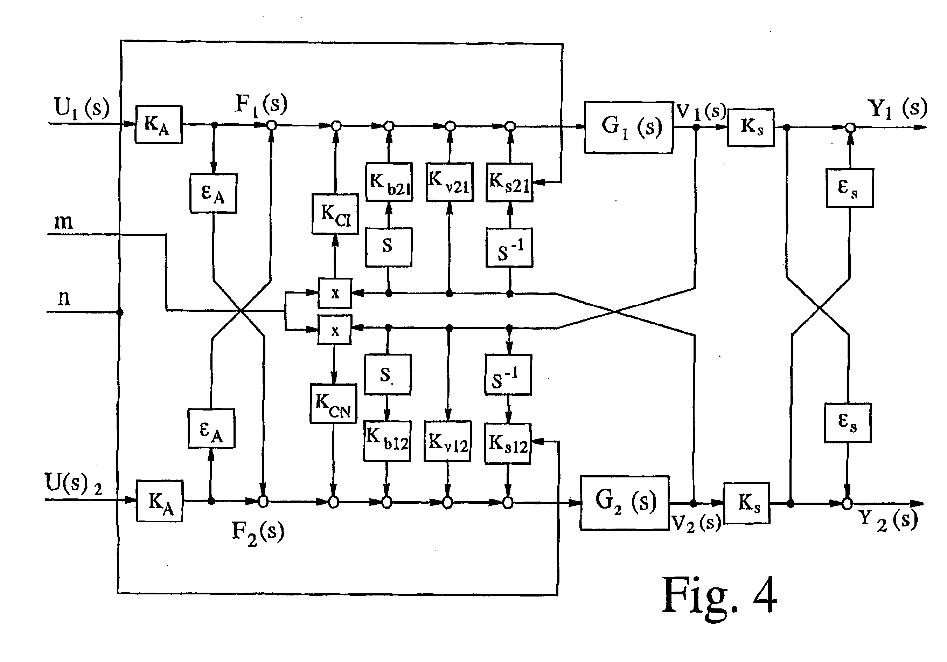

In Fig. 4 sind exemplarisch die Kopplungen der ersten Eigenform mit der zweiten Eigenform bezüglich der Differenz der Federsteifigkeiten und der Massen als reine auslenkungsproportionale Kopplungen $k_{sa12}$ und $k_{sa21}$ dargestellt.

In diesem Blockschaltbild bedeuten:

$\Delta p :=$ Differenzdruck im Meßrohr,
$\dot{m} :=$ Massendurchfluß,
$F_1(s) :=$ Anregungskraft im Bildbereich für die erste Eigenform,
$V_1(s) :=$ Geschwindigkeitssignal im Bildbereich für die erste Eigenform,
$G_1(s) :=$ Übertragungsfunktion der ersten Eigenform,
$k_{sa12} :=$ auslenkungsproportionale Kopplung von der ersten Eigenform auf die zweite Eigenform,
$F_2(s) :=$ Anregungskraft im Bildbereich für die zweite Eigenform,
$V_2(s) :=$ Geschwindigkeitssignal im Bildbereich für die zweite Eigenform,
$G_2(s) :=$ Übertragungsfunktion der zweiten Eigenform,
$k_{sa21} :=$ auslenkungsproportionale Kopplung von der zweiten Eigenform auf die erste Eigenform,
$K_{CN} :=$ massenstrombedingte (geschwindigkeitsproportionale) Kopplung von der ersten Eigenform auf die zweite Eigenform,
$K_{Cr} :=$ massenstrombedingte (geschwindigkeitsproportionale) Kopplung von der zweiten Eigenform auf die zweite Eigenform,

$S$:= Laplace-Operator ($S^{-1}$ bedeutet, daß das passierende Signal um -90° in den Phasen verschoben wird.)

Die auslenkungsproportionalen Kopplungen über $k_{sa21}$ und $k_{sa12}$ sind orthogonal zur massenstrombedingten (geschwindigkeitsproportionalen) Kopplung der Eigenforznen über $K_{CN}$ und $K_{Cl}$. Das bedeutet, daß im Prinzip die Separation der massenstrombedingten und differenadruckbedingten Schwingungen der Eigenformen gegeben ist.

Die Kopplungen $k_{saij}$ können über verschiedene Methoden bestimmt werden. Beispielsweise kann die Kopplung $k_{sa12}$ durch die Beziehung:

$$k_{sa12} = \frac{\omega_{01} \, Re\{V_2(\omega_{01})\}}{Re\{V_1(\omega_{01})\} \, Im\{G_2(\omega_{01})\}} \tag{25}$$

bestimmt werden. In dieser Gleichung sind

$k_{sa12}$:= Differenz der Federsteifigkeiten und der Massen der Meßrohrhälften $c_{Ma} - c_{Mb}$,

$\omega_{01}$:= Resonanzfrequenz der ersten Eigenform;

$Re\{V_1(\omega_{01})\}$ := Realanteil des Geschwindigkeitssignals der ersten Eigenform,

$Re\{V_2(\omega_{01})\}$;= Realanteil des Geschwindigkeitssignals der zweiten Eigenform,

$Im\{G_2(\omega_{01})\}$:= Imaginäranteil der Übertragungsfunktion der zweiten Eigenform.

Bei der Bestimmungsgleichung (Gleichung 25) wird davon ausgegangen, daß

1. das Meßrohr in der Resonanzfrequenz der ersten Eigenform $\omega_{01}$ schwingt und

2. der Realteil der Übertragungsfunktion des zweiten Modes gleich Null ist ($Re\{G_2(\omega_{01})\}=0$), d. h. daß die zweite Eigenform sich bei dieser Frequenz wie eine Feder verhält, deren Federkonstante bekannt ist.

Die Differenz der Federsteifigkeiten und der Massen $k_{sa12}$ und damit auch der Differenzdruck lassen sich in einem Kompensationsverfahren unabhängig von einem sich eventuell ändernden Imaginärteil der Übertragungsfunktion des zweiten Modes bestimmen. Dazu wird die gemessene Größe $Re\{V_2(\omega_{o1})\}$ in einem Regelkreis über die Anregung der zweiten Eigenform mit der Anregungskraft $F_2$ auf Null geregelt, Die Regelung erzwingt also, wie auch aus Fig. 4 erkennbar, daß gilt $F_{2k} = -F_{s12}$. Damit läßt sich $k_{sa12}$ als Maß für den Differenzdruck über die Bestimmungsgleichung

$$k_{sa12} = -\frac{\omega_{01} F_{2K}(\omega_{01})}{Re\{V_1(\omega_{01})\}} \tag{26}$$

messen. An dieser Stelle sei ausdrücklich darauf hingewiesen, daß die beiden Effekte, die druckdifferenzbedingten Federsteifigkeitsänderungen der Meßrohrhälften und die druckdifferenzbedingten Massenänderungen der Meßrohrhälften bei weiteren bevorzugten Realisierungen einzeln, getrennt oder in anderer Kombination zur Differenzdruckmessung verwendet werden können.

Aus den gemessenen Kopplungen $k_{saij}$ läßt sich der Druckabfall im Meßrohr berechnen. Dazu gilt im einfachsten Modellansatz:

$$\Delta p = K_{pij} k_{saij} + K_{pij0}, \text{ und speziell für } k_{sa12} \tag{27}$$

$$\Delta p = K_{p12} k_{sa12} + K_{p120}. \tag{28}$$

Die Parameter dieses Modellansatzes oder auch eventuell andere Modellansätze können während einer Kalibrierung des Massendurchflußmeßgeräts vorab ohne weiteres ermittelt und in entsprechender Weise abgespeichert werden. Ihre Bestimmung ist jedoch nicht immer notwendig, da $k_{saij}$ als Maß für $\Delta p$ zuerst in den Gleich- und den Wechselanteil zerlegt wird. Der Gleichanteil wird dann als Maß für die Viskosität und der Wechselanteil als Maß für die Bestimmung der Mehrphasenströmung verwendet.

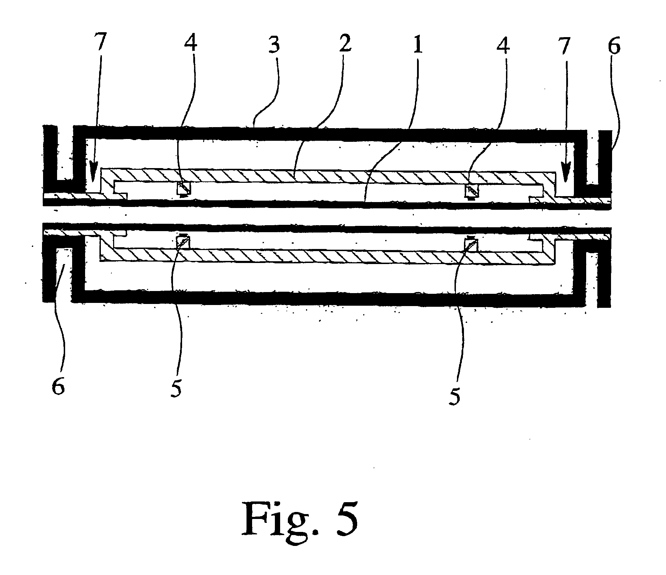

Fig. 5 zeigt im Schnitt ein Coriolis-Massendurchflußmeßgerät zur Verwendung mit dem vorliegend beschriebenen Verfahren gemäß einem bevorzugten Ausführungsbeispiel der Erfindung. Das Coriolis-Massendurchflußmeßgerät weist ein Meßrohr 1, ein Tragrohr 2, ein Schutzrohr 3, zwei Schwingungserzeuger 4 und zwei Schwingungssensoren 5 auf Dabei ist genau ein Meßrohr 1 mit einer geraden Bauform vorgesehen, das über Flansche 6 in ein bestehendes, nicht weiter dargestelltes Rohrleitungssystem eingebaut werden kann. Die Kopplung zwischen den Flanschen 6 und dem System auf Meßrohr 1 und Tragrohr 2 erfolgt dabei über als Aufhängung 7 bezeichnete Abschnitte. Außerdem ist in der Mitte des Meßrohrs 1 eine das Meßrohr 1 mit dem Tragrohr 2 verbindende Mittenfeder 8 vorgesehen, die dazu dient, die Steifigkeit des Meßrohrs 1 zu erhöhen, wie z. B. in der DE 42 00 060 A1 beschrieben. Dabei sei auch daraufhingewiesen, daß die Erfindung nicht auf die in Fig. 1 gezeigte Bauform beschränkt ist Vielmehr sind im wesentlichen beliebige Rohrgeometrien, unter anderem auch mit Doppelrohranordnung, möglich,

Aus Fig. 6 ist nun ein für das vorliegend verwendete physikalisch-mathematische Modell gültiger Modelleinsatz mit konzentrierten Ersatzelementen des Corivlis-Massendurchflußmeßgeräts ersichtlich. Die wesentlichen mechanischen Bewegungen des Coriolis-Massendurchflußmeßgeräts, wie in Fig. 5 gezeigt, sind die Schwingungen des Meßrohrs 1 und des Tragrohrs 2 in der ersten Eigenform und in der zweiten Eigenform. Sie lassen sich anhand des Schwingverhaltens des aus Fig. 6 ersichtlichen Modells beschreiben. Dabei beschreiben die Ersatzelemente mit Index $M$ die effektiv wirksamen Massen, Federn und Dämpfer des Meßrohrs 1 und die Elemente mit Index $T$ entsprechend die Parameter des Tragrohrs 2. Die mit dem Index $A$ gekennzeichneten Ersatzelemente für Massen, Federn und Dämpfer beschreiben die Ersatzelemente der Aufhängungen 7. Die Indizes $a$ und $b$ stellen jeweils die linke bzw. die rechte Hälfte des Meßrohrs 1, des Tragrohr 2 bzw. der Aufhängungen 7 dar. Die Feder und der Dämpfer mit dem Index $Fm$ tragen der Tatsache Rechnung, daß das Meßrohr 1 in der Mitte geführt ist, nämlich durch die Mittenfeder 8. Ist keine Mittenfeder 8 vorgesehen, so entfallen natürlich die entsprechenden Terme. Die Massen mit dem Index $m$ tragen der Tatsache Rechnung, daß an den Schwingungen in der ersten Eigenform des Meßrohrs bzw. des Tragrohrs eine größere Masse beteiligt ist, als an den Schwingungen in der zweiten Eigenform.

Einer Schwingung in der ersten Eigenform entspricht in diesem Modell die gleichphasige, translatorische Bewegung der Massen des Meßrohrs 1, des Tragrohrs 2 bzw. der Aufhängungen 7. Eine Rotation der äußeren Massen $a$ und $b$ mn die Drehachse $x_2$, $x_4$ bzw. $x_6$ entspricht einer Schwingung in der zweiten Eigenform. Die mathematische Beschreibung des Schwingungsverhaltens dieses Systems kann mit Hilfe der Lagrange-Gleichung 2. Art abgeleitet werden, was im Detail am Ende dieser Beschreibung ausgeführt ist.

Abschließend seien noch die Energiebilanz und die Bewegungsgleichungen wiedergegeben, auf die weiter oben Bezug genommen worden ist.

## Energiebilanz

Kinetische Energie:

$$E = \frac{1}{2} m_{Ma}(\dot{x}_1 + \dot{x}_2)^2 + \frac{1}{2} m_{Mb}(\dot{x}_1 - \dot{x}_2)^2 + \frac{1}{2} m_{Mm}\dot{x}_1^2 +$$
$$\frac{1}{2} m_{Ta}(\dot{x}_3 + \dot{x}_4)^2 + \frac{1}{2} m_{Tb}(\dot{x}_3 - \dot{x}_4)^2 + \frac{1}{2} m_{Tm}\dot{x}_3^2 +$$
$$\frac{1}{2} m_{Aa}(\dot{x}_5 + \dot{x}_6)^2 + \frac{1}{2} m_{Ab}(\dot{x}_5 - \dot{x}_6)^2 \tag{29}$$

Dissipierte Energie pro Zeiteinheit:

$$D = \frac{1}{2}d_{Ma}(\dot{x}_1 + \dot{x}_2 - \dot{x}_5 - \dot{x}_6)^2 + \frac{1}{2}d_{Mb}(\dot{x}_1 - \dot{x}_2 - \dot{x}_5 + \dot{x}_6)^2 +$$

$$\frac{1}{2}d_{Ta}(-\dot{x}_3 - \dot{x}_4 + \dot{x}_5 + \dot{x}_6)^2 + \frac{1}{2}d_{Tb}(-\dot{x}_3 + \dot{x}_4 + \dot{x}_5 - \dot{x}_6)^2 +$$

$$\frac{1}{2}d_{Aa}(\dot{x}_5 + \dot{x}_6)^2 + \frac{1}{2}d_{Ab}(\dot{x}_5 - \dot{x}_6)^2 + \qquad (30)$$

$$\frac{1}{2}d_m(\dot{x}_1 - \dot{x}_3)^2$$

Potentielle Energie:

$$U = \frac{1}{2}c_{Ma}(x_1 + x_2 - x_5 - x_6)^2 + \frac{1}{2}c_{Mb}(x_1 - x_2 - x_5 + x_6)^2 +$$

$$\frac{1}{2}c_{Ta}(-x_3 - x_4 + x_5 + x_6)^2 + \frac{1}{2}c_{Tb}(-x_3 + x_4 + x_5 - x_6)^2 +$$

$$\frac{1}{2}c_{Aa}(x_5 + x_6)^2 + \frac{1}{2}c_{Ab}(x_5 - x_6)^2 + \qquad (31)$$

$$\frac{1}{2}c_m(x_1 - x_3)^2$$

**Bewegungsgleichungen**

$$\frac{d}{dt}\left(\frac{\partial E}{\partial \dot{q}_n}\right) - \frac{\partial E}{\partial q_n} + \frac{\partial D}{\partial \dot{q}_n} + \frac{\partial U}{\partial q_n} = F_n \qquad (32)$$

Erste-Eigenform-Translation des Meßrohrs entlang der $x_1$-Achse:

$$(m_{Ma} + m_{Mb} + m_{Mm})\ddot{x}_1 + (d_{Ma} + d_{Mb} + d_m)\dot{x}_1 + (c_{Ma} + c_{Mb} + c_m)x_1 +$$
$$(m_{Ma} - m_{Mb})\ddot{x}_2 + (d_{Ma} - d_{Mb})\dot{x}_2 + (c_{Ma} - c_{Mb})x_2 +$$
$$(-d_m)\dot{x}_3 + (-c_m)x_3 + \qquad (33)$$
$$(-d_{Ma} - d_{Mb})\dot{x}_5 + (-c_{Ma} - c_{Mb})x_5 +$$
$$(-d_{Ma} + d_{Mb})\dot{x}_6 + (-c_{Ma} + c_{Mb})x_6 = F_1$$

Zweite-Eigenform-Rotation des Meßrohrs um die $x_2$-Achse:

$$(m_{Ma} + m_{Mb})\ddot{x}_2 + (d_{Ma} + d_{Mb})\dot{x}_2 + (c_{Ma} + c_{Mb})x_2 +$$
$$(m_{Ma} - m_{Mb})\ddot{x}_1 + (d_{Ma} - d_{Mb})\dot{x}_1 + (c_{Ma} - c_{Mb})x_1 +$$
$$(-d_{Ma} + d_{Mb})\dot{x}_5 + (-c_{Ma} + c_{Mb})x_5 + \qquad (34)$$
$$(-d_{Ma} - d_{Mb})\dot{x}_6 + (-c_{Ma} - c_{Mb})x_6 = F_2$$

Translation des Trägerrohrs entlang der $x_3$-Achse:

$$(m_{Ta} + m_{Tb} + m_{Tm})\ddot{x}_3 + (d_{Ta} + d_{Tb} + d_m)\dot{x}_3 + (c_{Ta} + c_{Tb} + c_m)x_3 +$$
$$(-d_m)\dot{x}_1 + (-c_m)x_1 +$$
$$(m_{Ta} - m_{Tb})\ddot{x}_4 + (d_{Ta} - d_{Tb})\dot{x}_4 + (c_{Ta} - c_{Tb})x_4 +$$
$$(-d_{Ta} - d_{Tb})\dot{x}_5 + (-c_{Ta} - c_{Tb})x_5 +$$
$$(-d_{Ta} + d_{Tb})\dot{x}_6 + (-c_{Ta} + c_{Tb})x_6 = -F_1 \tag{35}$$

Rotation des Trägerrohrs um die $x_4$-Achse:

$$(m_{Ta} + m_{Tb})\ddot{x}_4 + (d_{Ta} + d_{Tb})\dot{x}_4 + (c_{Ta} + c_{Tb})x_4 +$$
$$(m_{Ta} - m_{Tb})\ddot{x}_3 + (d_{Ta} - d_{Tb})\dot{x}_3 + (c_{Ta} - c_{Tb})x_3 +$$
$$(-d_{Ta} + d_{Tb})\dot{x}_5 + (-c_{Ta} + c_{Tb})x_5 +$$
$$(-d_{Ta} - d_{Tb})\dot{x}_6 + (-c_{Ta} - c_{Tb})x_6 = -F_2 \tag{36}$$

Translation entlang der $x_5$-Achse:

$$(m_{Aa} + m_{Ab})\ddot{x}_5 + (d_{Ma} + d_{Mb} + d_{Ta} + d_{Tb} + d_{Aa} + d_{Ab})\dot{x}_5 +$$
$$(c_{Ma} + c_{Mb} + c_{Ta} + c_{Tb} + c_{Aa} + c_{Ab})x_5 +$$
$$(-d_{Ma} - d_{Mb})\dot{x}_1 + (-c_{Ma} - c_{Mb})x_1 +$$
$$(-d_{Ma} + d_{Mb})\dot{x}_2 + (-c_{Ma} + c_{Mb})x_2 +$$
$$(-d_{Ta} - d_{Tb})\dot{x}_3 + (-c_{Ta} - c_{Tb})x_3 +$$
$$(-d_{Ta} + d_{Tb})\dot{x}_4 + (-c_{Ta} + c_{Tb})x_4 +$$
$$(m_{Aa} - m_{Ab})\ddot{x}_6 +$$
$$(d_{Ma} - d_{Mb} + d_{Ta} - d_{Tb} + d_{Aa} - d_{Ab})\dot{x}_6 +$$
$$(c_{Ma} - c_{Mb} + c_{Ta} - c_{Tb} + c_{Aa} - c_{Ab})x_6 = F_5 \tag{37}$$

Rotation um die $x_6$-Achse:

$$(m_{Aa} + m_{Ab})\ddot{x}_6 + (d_{Ma} + d_{Mb} + d_{Ta} + d_{Tb} + d_{Aa} + d_{Ab})\dot{x}_6 +$$
$$(c_{Ma} + c_{Mb} + c_{Ta} + c_{Tb} + c_{Aa} + c_{Ab})x_6 +$$
$$(-d_{Ma} + d_{Mb})\dot{x}_1 + (-c_{Ma} + c_{Mb})x_1 +$$
$$(-d_{Ma} - d_{Mb})\dot{x}_2 + (-c_{Ma} - c_{Mb})x_2 +$$
$$(-d_{Ta} + d_{Tb})\dot{x}_3 + (-c_{Ta} + c_{Tb})x_3 +$$
$$(-d_{Ta} - d_{Tb})\dot{x}_4 + (-c_{Ta} - c_{Tb})x_4 +$$
$$(m_{Aa} - m_{Ab})\ddot{x}_5 +$$
$$(d_{Ma} - d_{Mb} + d_{Ta} - d_{Tb} + d_{Aa} - d_{Ab})\dot{x}_5 +$$
$$(c_{Ma} - c_{Mb} + c_{Ta} - c_{Tb} + c_{Aa} - c_{Ab})x_5 = F_6 \tag{38}$$

**Patentansprüche**

1. Verfahren zum Betreiben eines Massendurchflußmeßgeräts, das nach dem Coriolis-Prinzip arbeitet, wobei das Massendurchflußmeßgerät ein von einem Medium durchströmtes Meßrohr (1) aufweist, das Meßrohr (1) mit wenigstens einer Frequenz zu Schwingungen angeregt wird, die resultierenden Schwingungen des Meßrohrs (1) erfaßt werden und die Viskosität des durch das Meßrohr (1) strömenden Mediums über den Druckabfall längs des Meßrohrs (1) bestimmt wird,
   **dadurch gekennzeichnet,**
   **daß** der Druckabfall längs des Meßrohrs (1) bestimmt wird, indem die erfaßten Schwingungen des Meßrohrs (1) auf der Grundlage eines physikalisch-mathematischen Modells für die Dynamik des Massendurchflußmeßgeräts ausgewertet werden, wobei das physikalisch-mathematische Modell zur Beschreibung der Schwingungen des Massendurchflußmeßgeräts bei Anregung des Meßrohrs (1) in wenigstens einer Eigenform geeignet ist, wobei das physikalisch-mathematische Modell die Kopplung zwischen wenigstens zwei Eigenformen der Schwingungen des Meßrohrs (1) berücksichtigt, wobei das physikalisch-mathematische Modell außer dem Meßrohr (1) auch den Einfluß wenigstens einer weiteren Einrichtung des Massendurchflußmeßgeräts, wie einem Tragrohr (2) oder/und einer Aufhängung (7) des Meßrohrs (1) des Massendurchflußmeßgeräts, berücksichtigt, wobei die Temperatur im Massendurchflußmeßgerät erfaßt wird, um die Temperaturabhängigkeit der Funktion von Einrichtungen des Massendurchflußmeßgeräts, wie einem Schwingungserzeuger (4) für das Meßrohr (1) oder/und einem Schwingungssensor (5) für das Meßrohr (1), zu berücksichtigen.

2. Verfahren nach Anspruch 1, **dadurch gekennzeichnet, daß** die Viskosität nach der Formel

$$\eta = \frac{\bar{v}\rho d}{Re}$$

   bestimmt wird.

3. Verfahren nach Anspruch 1 oder 2, **dadurch gekennzeichnet, daß** die Temperatur des Meßrohrs (1) benützt wird, um eine temperaturabhängige Änderung der Geometrie des Meßrohrs (1) zu berücksichtigen.

4. Verfahren nach einem der Ansprüche 1 bis 3, **dadurch gekennzeichnet, daß** der Druck des Meßrohrs (1) erfaßt wird, um eine druckabhängige Änderung der Geometrie des Meßrohrs (1) zu berücksichtigen.

**Claims**

1. Method for operating a mass flowmeter employing the Coriolis principle, wherein the mass flowmeter has a measuring tube (1) with medium flowing through it, the measuring tube (1) being excited to oscillation at at least one frequency, the resulting oscillations of the measuring tube (1) being detected and the viscosity of the medium flowing through the measuring tube (1) being determined using the pressure drop along the measuring tube (1),
   **characterized in**
   **that** the pressure drop along the measuring tube (1) is determined in that the detected oscillations of the measuring tube (1) are evaluated on the basis of a physical-mathematical model for the dynamics of mass flowmeters, wherein the physical-mathematical model is suitable for describing the oscillations of the mass flowmeter at excitation of the measuring tube (1) in at least one natural mode, wherein the physical-mathematical model factors in the coupling between at least two natural modes of the oscillations of the measuring tube (1), wherein, in addition to the measuring tube (1), the physical-mathematical model factors in the influence of at least one further component of the mass flowmeter, such as a supporting tube (2) and/or a suspension (7) of the measuring tube (1) of the mass flowmeter, wherein the temperature in the mass flowmeter is detected in order to factor in the temperature dependency of the function of components of the mass flowmeter, such as an oscillation generator (4) for the measuring tube (1) and/or an oscillation sensor (5) for the measuring tube.

2. Method according to claim 1, **characterized in that** the viscosity is determined using the formula

$$\eta = \frac{\overline{v}\rho d}{Re}$$

3. Method according to claim 1 or 2, **characterized in that** the temperature of the measuring tube (1) is used to factor in a temperature-dependent change in the geometry of the measuring tube (1).

4. Method according to any one of claims 1 to 3, **characterized in that** the pressure of the measuring tube (1) is detected in order to factor in a pressure-dependent change in the geometry of the measuring tube (1).

**Revendications**

1. Procédé de conduite d'un appareil de mesure de débit massique qui travaille selon le principe de Coriolis, l'appareil de mesure de débit massique présentant un tube de mesure (1) traversé par un fluide, le tube de mesure (1) étant mis en vibration à au moins une fréquence, les vibrations qui en résultent sur le tube de mesure (1) étant saisies et la viscosité du fluide qui traverse le tube de mesure (1) étant déterminée par l'intermédiaire de la perte de charge le long du tube de mesure (1),
**caractérisé en ce que**
la perte de charge le long du tube de mesure (1) est déterminée en évaluant les vibrations saisies sur le tube de mesure (1) sur la base d'un modèle physico-mathématique de la dynamique de l'appareil de mesure de débit massique,
**en ce que** le modèle physico-mathématique convient pour décrire les vibrations de l'appareil de mesure de débit massique lorsque le tube de mesure (1) est excité en au moins un mode propre,
**en ce que** le modèle physico-mathématique tient compte du couplage entre au moins deux modes propres des vibrations du tube de mesure (1),
**en ce que** le modèle physico-mathématique tient compte en plus du tube de mesure (1) de l'influence d'au moins un autre dispositif de l'appareil de mesure de débit massique, par exemple un tube de support (2) et/ou une suspension (7) du tube de mesure (1) de l'appareil de mesure de débit massique et
**en ce que** la température qui règne dans l'appareil de mesure de débit massique est saisie pour tenir compte de la dépendance vis-à-vis de la température du fonctionnement des dispositifs de l'appareil de mesure de débit massique, par exemple un générateur (4) de vibrations du tube de mesure (1) et/ou un capteur (5) de vibrations du tube de mesure (1).

2. Procédé selon la revendication 1, **caractérisé en ce que** la viscosité est déterminée selon la formule

$$\eta = \frac{\overline{v}\rho d}{Re}$$
.

3. Procédé selon les revendications 1 ou 2, **caractérisé en ce que** la température du tube de mesure (1) est utilisée pour tenir compte d'une modification de la géométrie du tube de mesure (1) en fonction de la température.

4. Procédé selon l'une des revendications 1 à 3, **caractérisé en ce que** la pression du tube de mesure (1) est saisie pour tenir compte d'une modification de la géométrie du tube de mesure (1) en fonction de la pression.

Fig. 1

14

Fig. 2

Fig. 3

Fig. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002635 A1
- DE 10020606 A1
- WO 0036379 A
- DE 4200060 A1